# EUROPEAN PATENT SPECIFICATION

(11) **EP 0 606 227 B1**
(45) Date of publication and mention of the grant of the patent: **26.01.2000**
(21) Application number: 92917022.3
(22) Date of filing: 03.08.1992
(51) Int. Cl.: B32B 3/12

(54) **PERFORATED HONEYCOMB**
PERFORIERTER WABENKÖRPER
NID D'ABEILLES PERFORE

(43) Date of publication of application: 20.07.1994
(73) Proprietor: SUPRACOR, INC., San Jose, California 95131 (US)
(72) Inventor: LANDI, Curtis, L., Sunnyvale, CA 94086 (US); WILSON, Susan, L., Sunnyvale, CA 94086 (US)
(74) Representative: Gahlert, Stefan, Dr.-Ing.
(86) International application number: US9206480
(87) International publication number: WO9403327

(56) References cited:
- EP-A- 0 352 993
- DE-A- 2 134 220
- FR-A- 913 070
- FR-A- 2 128 939
- FR-A- 2 539 784
- US-A- 3 011 254
- US-A- 3 138 506
- US-A- 3 575 756
- US-A- 3 821 999
- US-A- 3 895 152
- US-A- 4 671 841
- US-A- 5 039 567

## Description

This invention relates to a honeycomb panel having anisotropic flexing characteristics for dampening or dissipating pressure forces or waves according to the preamble of claim 1.

A honeycomb panel of the aforementioned kind is known from EP-A-0 352 993.

Early honeycomb panels were made from rigid materials which were both strong and lightweight. These materials, however, were not resilient and would permanently deform if crushed. See for example, the U.S. Patents to Barut US-A-3 018 205, Eaking et al. US-A-3 556 917, and Kennedy et al. US-A-3 483 070.

Applications of honeycomb made from resilient materials include Holland US-A-2 887 425, and Landi et al. US-A-4 422 183 and US-A-4 485 568. According to US-A-5 039 567 a resilient honeycomb is made from thermoplastic elastomeric strips that are intermittently bonded together at staggered intervals along the length of the strip. The thermoplastic materials used in the manufacture of the honeycomb core provide resiliency so that the honeycomb returns to its original shape following deformation. Resilient honeycomb is used for shock absorption and vibration dampening as well as lightweight insulation.

The resilient honeycomb of the prior art consisted of whole strips of intermittently bonded thermoplastic that were stretched open to create the core. If facings were used, they too were made from whole materials, and bonded to the planar surface created by the wall edges of the honeycomb core.

The honeycomb panel according to EP-A-0 352 993 mentioned at the outset is a noise attenuation panel having a backing sheet, a facing sheet and a cellular core having a multiplicity of open-ended juxtaposed cells. The cellular core is made of a thermoplastic material. The cells of the honeycomb core of this known panel comprise drainage slots to allow for condensates to drain from the panel, which are disposed at the lower end of the cell walls adjacent the backing sheet.

It is an object of the present invention to further improve a honeycomb panel mentioned at the outset having a honeycomb core made from thermoplastic elastomeric materials so that the panel is improved in absorbing or dissipating pressure waves such as sound as well as vibration, is reduced in weight, yet has increased resilience as well as increased flexibility.

This object is achieved by a honeycomb panel with the features of claim 1.

Perforating the thermoplastic material changes the response characteristics of the material by increasing the resiliency of the honeycomb while decreasing the total weight. Perforated honeycomb is lighter in weight than non-perforated honeycomb. Additionally, where a perforated honeycomb core is used with non-perforated facing material, liquids or gases contained therein can be transferred between the cells.

Briefly, a honeycomb panel according to the present invention includes a panel comprised of a core of perforated, thermoplastic elastomeric honeycomb bonded to and disposed between two sheets of thermoplastic elastomeric facing material. The core is made from a plurality of advanced grade, thermoplastic elastomeric sheets that have been perforated, such that there is a matrix of small holes in the material. The small holes are sized for throttling the flow of escaping air, to thereby absorb the stock of mechanical force applied to the honeycomb panel. The sheets are stacked and intermittently fusion welded or bonded to form a stack from which elongated segments can be severed and expanded to form a honeycomb-like network of cells. The cores may then have a sheet of thermoplastic material fusion-bonded to one or both sides thereof. The material from which the core and/or facing sheets are made may be plain or reinforced with suitable materials such as fabrics or fibers.

Where perforated facings are used, the holes in the facing allow air or fluid to enter into, and be distributed through, the cells of the honeycomb core. Upon entry into the core, any pressure wave associated with the fluid flow will disperse and dissipate, so that any pressure wave (sound, for example) that does travel completely through the perforated panel is muffled.

A further advantage of the present invention is that the elastomeric material comprising the honeycomb and/or facings may be of various strengths and thicknesses to provide dissipation.

Yet another advantage of the present invention is that the perforated honeycomb is resilient and thus will deform under pressure and then return to its original shape when the pressure is lifted.

These and other objects and advantages of the present invention will no doubt become apparent to those skilled in the art after having read the following detailed description of the preferred embodiment which is contained in and illustrated by the various drawing figures.
Fig. 1 is a perspective view of a block of material of the present invention with the facing broken away to reveal the perforated honeycomb core, and also illustrated is a separate section of material having a perforated honeycomb core as well as perforated facing material;
Fig. 2 is a perspective view of wall mounted public telephones showing the material of the present invention used for acoustic insulation disposed on the inside of telephone privacy panels to muffle sound; and
Fig. 3 depicts the present invention in use as a shock-absorbing cushion.
Fig. 4 is a partially broken depiction of an alternative embodiment of a shock-absorbing cushion in accordance with the present invention.

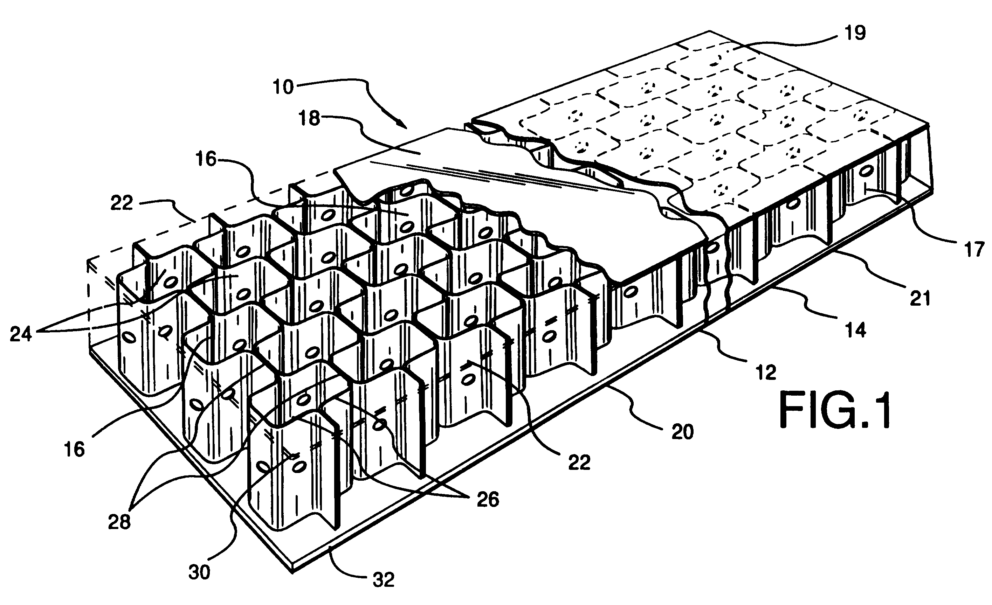

Fig. 1 is a perspective view of a block 10 of material fabricated in accordance with the present invention. The block 10 is broken into two sections 12 and 14 to illustrate alternative embodiments.

The left half 12 of the block shows material having a perforated honeycomb core 16 and unperforated or solid facings 18 and 20. The top facing 18 is broken away to show the perforated honeycomb core 16. The dashed lines 22 illustrate the normal full coverage of the top facing 18.

The honeycomb core 16 is made from sheets of an advanced grade thermoplastic elastomeric material that have been perforated such that a matrix of small holes exist throughout. The sheets are compression bonded together at spaced intervals staggered between alternate sheets as described in our copending U.S. Patent Application Serial No. 07/446,320 filed December 4, 1989, and incorporated herein by reference. The resulting stack is then cut into strips which, when expanded, create a honeycomb network of elongated, generally hexagonally shaped cells 24.

Each cell 24 of the honeycomb core 16 is defined by four generally S-shaped wall segments, each interior wall of which is shared by an adjacent cell. The wall segments of each cell 24 include single thickness wall portions 26 and double thickness wall portions 28, the latter portions being disposed on each side of the cell where the side wall of one cell is compression bonded to the side wall of an immediately adjacent cell.

The upper and lower extremities of the walls forming the several cells are deformed during a planarization operation disclosed in our above-identified copending U.S. Patent Application and create upper and lower extremities 30 and 32 of the honeycomb core. Facings 18 and 20, cut from sheets of a resilient thermoplastic material, are then compression-bonded to the top and bottom core faces 30 and 32. The addition of the facings 18 and 20 strengthens the core 16 and provides an ample surface for adhering a panel of the material to a wall, board or other surface.

The right half 14 of the block depicted in Fig. 1 includes a perforated honeycomb core 17 similar to the left half 12 of the block, but has facings 19 and/or 21 made of perforated material. The dashed lines indicate the honeycomb pattern of the core 17 underneath the top facing 19. By perforating both the honeycomb core and the facings, the weight of the material is reduced while the resiliency and flexibility is increased. The weight is reduced because the perforations reduce the overall quantity of material comprising the honeycomb and facings. Similarly, the flexibility is increased because there is less material to constrain each segment of the material from bending. The resiliency, or ability of the structure to spring back to its original form after being compressed, is also enhanced by virtue of the additional passages through which air can return to fill the cells.

It will be appreciated that the resilient but damped restorative characteristics of the structure make it an excellent absorber of shock waves or sound waves. The honeycomb block's superior sound dampening characteristics result from the use of perforated honeycomb material as well as the use of thermoplastic (or thermoplastic elastomeric materials) for both the honeycomb core 16 and the facings 18 and 20. Chopped fibers of materials such as glass, plastics or polyetherimides (PEI), or elastomer-coated fabrics can be added to the honeycomb material in order to add to or vary the strength of the panel.

There the panel will be used to dampen sound, the characteristics of the elastomer material can be varied to effect the level of acoustic absorption desired. An elastomer having a low resiliency rate tends to dampen sound by absorbing it, while an elastomer having a quicker return rate will tend to dissipate sound, thereby muffling it. The material can also be made frequency-selective so that it absorbs or dissipates sounds within a certain frequency range while allowing other sounds to pass through.

The core and/or facing sheets can also be made from sheets of woven fabric of a unidirectional, bidirectional, multidirectional or triaxial weave impregnated with a suitable thermoplastic resin. Such fabrics may be made from a wide variety of materials including glass, graphite, nylon and ceramics. High temperature thermoplastic resins in this format offer a wide variety of features heretofore unavailable. In addition to adding strength to the materials, the addition of the reinforcing fabrics reduces the weight since less resin is used. Products made of these materials would be produced using the same process described in our above identified copending patent except that in some cases the processing temperature would be higher.

Other favorable characteristics of the honeycomb block 10 include its durability and tear resistance. While the honeycomb block 10 is strong, it is also extremely lightweight. From a volumetric viewpoint, bare honeycomb (without facings) that is non-perforated is approximately 93% air. Perforated honeycomb has even less material and is therefore lighter yet. Even with the facings attached, the weight of the perforated honeycomb compares favorably with that of other acoustic insulation.

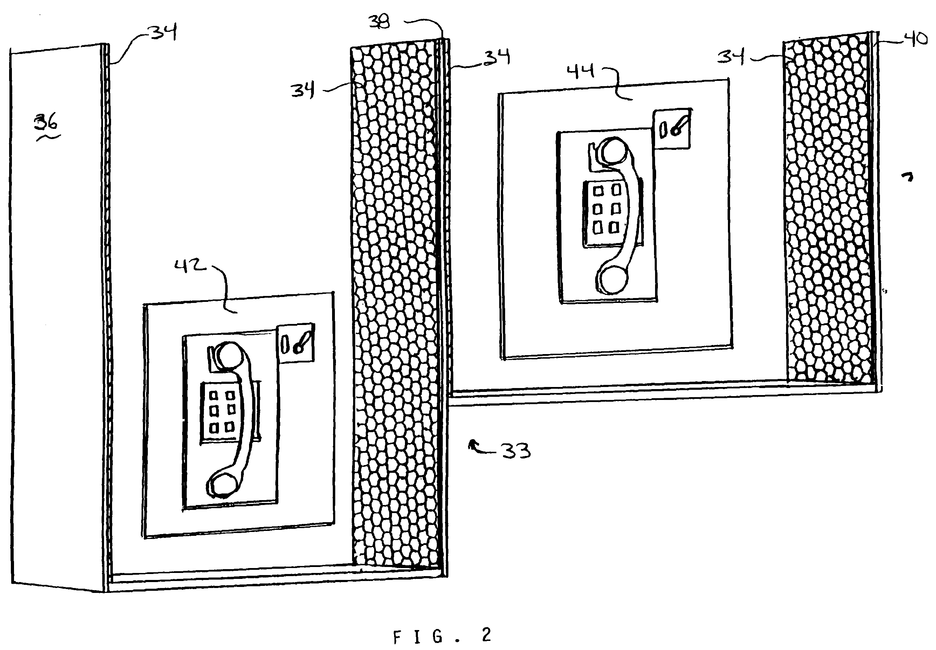

Fig. 2 is a perspective view showing a set of privacy panels for wall-mounted public telephones 33. The perforated honeycomb of the present invention is shown used as acoustic insulation 34, disposed on the inside walls of the panels 36, 38 and 40 of both a handicap phone location 42 and the standard phone position 44. The honeycomb insulation 34 will muffle the voices of the people using the phones, thereby providing privacy as well as a quieter environment in which to carry on a conversation over the phone.

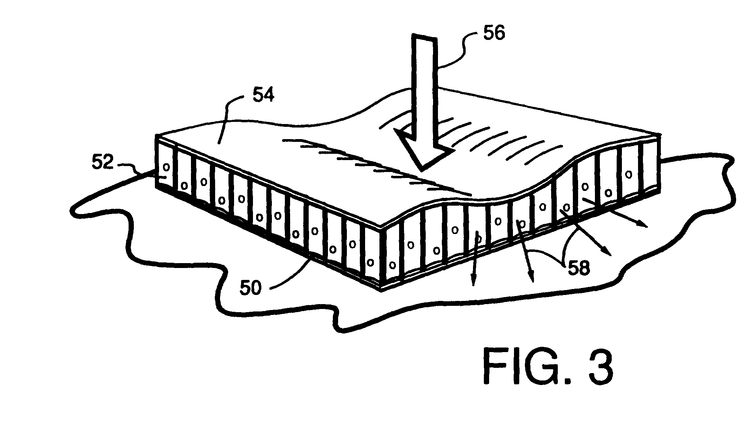

In Fig. 3, use of the present invention as a shock-absorbing cushion or pad is shown at 50. With only the core 52 being perforated, a force applied to the top surface 54, as suggested by the arrow 56, will cause the cushion to be compressed, tending to drive the air within the compressed cells of core 52 outwardly as indicated by the arrows 58. If the holes or perforations in the core material are small, they will tend to throttle the flow of escaping air and thereby absorb the shock of the applied force. The shock-absorbing characteristics of the pad are determined by both the resiliency of the thermoplastic materials and the number and size of the perforations. Note that for some applications it may also be desirable to provide perforations in the top and/or bottom sheets of facing material.

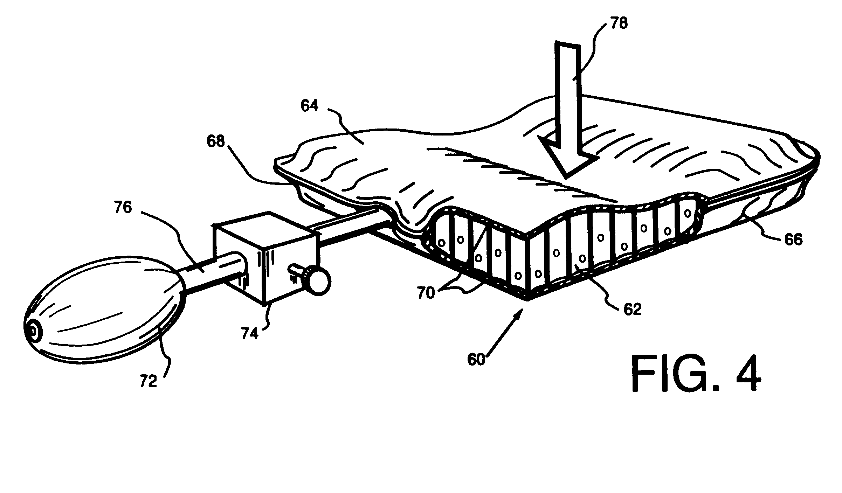

Referring now to Fig. 4 of the drawing, an alternative embodiment of the present invention is illustrated at 60 wherein the perforated core 62 is affixed to the inside surfaces of upper and lower sheets 64 and 66, which extend outwardly beyond the core 62 and are sealed around their perimeters, as indicated at 68, so as to form a closed chamber which is hermetically sealed and adapted to contain a suitable gas. Note that, for purposes of illustration, the chamber walls are broken away as indicated at 70.

In order to permit the gas contained within the enclosed chamber to be increased or decreased in volume or pressure, a suitable pump, such as the bulb pump 72, is provided along with an exhaust valve 74, and the two are connected to the device 60 by means of a suitable conduit 76. As will be appreciated by those skilled in the art, the selective addition or subtraction of gas to/from the enclosed chamber will result in a change in the shock-absorbing or force-dissipating characteristics of the pad in response to applied forces such as illustrated at 78.

A pad of material provided in accordance with the present invention can be used to support and provide shock absorption and/or vibration isolation between a vibrating mechanism, such as a motor or reciprocating actuator, and the surface upon which it rests. It can also be used to provide resilient padding for a wide variety of applications including furniture, auto seats, floor pads, body engaging straps, seat belts, etc. Furthermore, a pad of the type depicted in Fig. 4 can be used to provide lightweight body protective padding such as might be used in various types of sportswear adapted to protect both the body, feet, head and other bodily parts of the user. Note also that the same structure could be used to fashion a lightweight "blow-up" sleeping bag, vest or other article of clothing to provide insulative warmth, the warmth-providing feature resulting from the insulative quality of the gas contained within the padding, while at the same time providing shock protection.

Although the present invention has been described above in terms of cedrtain specific embodiments, it is anticipated that alterations and modifications thereof will no doubt become apparent to those skilled in the art. It is therefore intended that the following claims be interpreted as covering all such alterations and modifications as fall within the scope of the invention.

## Claims

1. A honeycomb panel having anisotropic flexing characteristics for dampening or dissipating pressure forces or waves, comprising:
a honeycomb core (16; 17; 52; 62) comprising cell walls defining a plurality of contiguous regularly shaped cells (24);
a first facing sheet (18; 19) of said thermoplastic material, bonded to an upper surface of said core (16; 17; 52; 62) formed by the upper extremeties (30) of said cell walls; and
a second facing sheet (20; 21) of said thermoplastic material, bonded to a lower surface of said core (16; 17; 52; 62) formed by the lower extremeties (32) of said cell walls;
wherein said cell walls of the honeycomb core (16; 17; 52; 62) comprise apertures forming communicating passageways therethrough;
characterized in that said cell walls are formed of undulated strips of resilient thermoplastic material, thermal compression bonded together;
said first and second facing sheets (18; 19; 20; 21) are formed of resilient thermoplastic material and bonded to the joinder of said first or second facing sheet (18; 19; 20; 21), respectively, and said core by simultaneously applying heat and pressure; and
in that said apertures are configured as small perforations provided in each of said walls linking contiguous cells (24) and sized for throttling the flow of escaping air, to thereby absorb the shock of mechanical force applied to the honeycomb panel.

2. The honeycomb panel of claims 1, characterized in that it is used in a sound-absorbing material for application to one or more walls of an enclosure-forming means.

3. The honeycomb panel of claims 1, characterized in that it is used in a shock-absorbing pad comprising a body of material cut from the honeycomb panel.

4. The honeycomb panel of claims 1, characterized in that said material is a thermoplastic elastomer.

5. The honeycomb panel of claims 1, characterized in that said material contains fibers of a different material.

6. The honeycomb panel of claims 1, characterized in that said material is comprised of a woven fabric contained within a thermoplastic resin.

7. The honeycomb panel of claim 6, characterized in that said fabric is of a weave selected from the group consisting of unidirectional, bidirectional, multidirectional and triaxial weaves.

8. The honeycomb panel of claim 1, characterized in that said first (18; 19) and second (20; 21) facing sheets are sealingly joined together so as to provide a hermetically sealed chamber enclosing said honeycomb core (16; 17; 52; 62).

9. The honeycomb panel of claim 8, characterized in that it further includes means (72, 74, 76) for selectively adding gas to or subtracting gas from said sealed chamber to change the dampening or force-dissipating characteristics of said panel.

10. The honeycomb panel of claim 9, characterized in that said means for selectively adding gas to or subtracting gas from said chamber includes a pump means (72) and an associated valve means (74).

## Patentansprüche

1. Wabenplatte mit anisotropen Biegecharakteristika zur Dämpfung oder Dissipation von Druckkräften oder -wellen, mit:
einem Wabenkern (16; 17; 52; 62), mit Zellenwänden, die eine Mehrzahl von aneinander angrenzenden, regelmäßig geformten Zellen (24) definieren;
einer ersten Deckplatte (18; 19) aus thermoplastischem Material, die an eine obere Oberfläche des Kerns (16; 17; 52; 62), die durch die oberen Ausläufer (30) der Zellenwände gebildet ist, gebondet ist; und
einer zweiten Deckplatte (20; 21) aus dem thermoplastischen Material, die an eine untere Oberfläche des Kerns (16; 17; 52; 62), die durch die unteren Ausläufer (32) der Zellenwände gebildet ist, gebondet ist;
wobei die Zellenwände des Wabenkerns (16; 17; 52; 62) Öffnungen aufweisen, die kommunizierende Durchlässe dadurch bilden;
dadurch gekennzeichnet, daß die Zellenwände aus gewellten Streifen aus elastischem, thermoplastischem Material gebildet sind, die miteinander kompressionsgebondet sind;
daß die ersten und zweiten Deckplatten (18; 19; 20; 21) aus elastischem, thermoplastischem Material gebildet sind und mit der Verbindung zwischen der ersten bzw. der zweiten Deckplatte (18; 19; 20; 21) und dem Kern durch gleichzeitiges Aufbringen von Wärme und Druck gebondet sind; und
daß die Öffnungen als kleine Perforationen in jeder der Wände vorgesehen sind, die einander angrenzende Zellen (24) verbinden und eine solche Größe aufweisen, daß der Durchfluß von entweichender Luft gedämpft wird, um dadurch den Aufprall von mechanischer Kraft auf die Wabenplatte zu absorbieren.

2. Wabenplatte nach Anspruch 1, dadurch gekennzeichnet, daß sie bei einem schallabsorbierenden Material zur Anwendung auf eine oder mehrere Wände einer eine Umhüllung bildenden Einrichtung verwendet wird.

3. Wabenplatte nach Anspruch 1, dadurch gekennzeichnet, daß sie in einem stoßabsorbierenden Kissen verwendet wird, das einen Materialkörper aufweist, der aus der Wabenplatte zugeschnitten ist.

4. Wabenplatte nach Anspruch 1, dadurch gekennzeichnet, daß das Material ein thermoplastisches Elastomer ist.

5. Wabenplatte nach Anspruch 1, dadurch gekennzeichnet, daß das Material Fasern aus einem anderen Material aufweist.

6. Wabenplatte nach Anspruch 1, dadurch gekennzeichnet, daß das Material aus einem Textilgewebe besteht, das in einem thermoplastischen Harz aufgenommen ist.

7. Wabenplatte nach Anspruch 6, dadurch gekennzeichnet, daß das Gewebe eine Webart aufweist, die aus der Gruppe von unidirektionalen, bidirektionalen, multidirektionalen und triaxialen Bindungsarten ausgewählt ist.

8. Wabenplatte nach Anspruch 1, dadurch gekennzeichnet, daß die erste (18; 19) und zweite (20; 21) Deckplatte dichtend miteinander verbunden sind, um so eine hermetisch versiegelte Kammer zu bilden, die den Wabenkern (16; 17; 52; 62) einschließt.

9. Wabenplatte nach Anspruch 8, dadurch gekennzeichnet, daß sie ferner Mittel (72, 74, 76) zur selektiven Zuführung oder Entnahme von Gas aus der abgedichteten Kammer umfaßt, um die Dämpfungscharakteristika oder die kraftabschwächenden Charakteristika der Platte zu verändern.

10. Wabenplatte nach Anspruch 9, dadurch gekennzeichnet, daß die Mittel zur selektiven Zuführung oder Entnahme von Gas aus der Kammer eine Pumpeinrichtung (72) und eine zugehörige Ventileinrichtung (74) umfassen.

## Revendications

1. Panneau à alvéoles ayant des caractéristiques de flexion anisotrope pour amortir ou dissiper les forces ou les ondes de pression, comprenant :
un coeur à alvéoles (16, 17, 52, 62) comprenant des parois formant cellules définissant une pluralité de cellules contiguës de forme régulière (24),
une première plaque de revêtement (18, 19) de ladite matière thermoplastique, soudée à une surface supérieure dudit coeur (16, 17, 52, 62) formée par les extrémités supérieures (30) desdites parois formant cellules, et
une deuxième plaque de revêtement (20, 21) de ladite matière thermoplastique, soudée à une surface inférieure dudit coeur (16, 17, 52, 62) formée par les extrémités inférieures (32) desdites parois formant cellules,
caractérisé en ce que lesdites parois formant cellules du coeur à alvéoles (16, 17, 52, 62) comprennent des ouvertures formant des passages de communication à travers celles-ci,
caractérisé en ce que lesdites parois formant cellules sont constituées de bandes ondulées de matière thermoplastique élastique, soudées les unes aux autres par compression thermique,
lesdites première et deuxième plaques de revêtement (18, 19, 20, 21) sont constituées de matière thermoplastique élastique et sont soudées au point de jonction entre ladite première ou deuxième plaque de revêtement (18, 19, 20, 21), respectivement, et ledit coeur en appliquant simultanément de la chaleur et une pression, et
en ce que lesdites ouvertures ont la configuration de petites perforations pratiquées dans chacune desdites parois reliant les cellules contiguës (24) et sont dimensionnées pour étrangler le flux d'air qui s'échappe, afin d'amortir le choc d'une force mécanique appliquée sur le panneau à alvéoles.

2. Panneau à alvéoles de la revendication 1, caractérisé en ce qu'il est utilisé dans une matière insonorisante en vue d'une application sur une ou plusieurs parois d'un moyen formant une chambre fermée.

3. Panneau à alvéoles de la revendication 1, caractérisé en ce qu'il est utilisé dans un matelas amortisseur de chocs comprenant un corps de matière découpé à partir du panneau à alvéoles.

4. Panneau à alvéoles de la revendication 1, caractérisé en ce que ladite matière est un élastomère thermoplastique.

5. Panneau à alvéoles de la revendication 1, caractérisé en ce que ladite matière contient des fibres d'une matière différente.

6. Panneau à alvéoles de la revendication 1, caractérisé en ce que ladite matière est composée d'un tissu imprégné d'une résine thermoplastique.

7. Panneau à alvéoles de la revendication 6, caractérisé en ce que ledit tissu est composé d'un tissage choisi parmi le groupe constitué des tissages unidirectionnels, bidirectionnels, multidirectionnels et triaxiaux.

8. Panneau à alvéoles de la revendication 1, caractérisé en ce que lesdites première (18, 19) et deuxième (20, 21) plaques de revêtement sont jointes l'une à l'autre de manière hermétique afin de former une chambre hermétiquement fermée renfermant ledit coeur à alvéoles (16, 17, 52, 62).

9. Panneau à alvéoles de la revendication 8, caractérisé en ce qu'il comprend en outre un moyen (72, 74, 76) permettant, de manière sélective, d'ajouter du gaz dans ladite chambre hermétiquement fermée ou de soustraire du gaz de ladite chambre afin de modifier les caractéristiques d'amortissement ou de dissipation de forces dudit panneau.

10. Panneau à alvéoles de la revendication 9, caractérisé en ce que ledit moyen permettant, de manière sélective, d'ajouter du gaz dans ladite chambre ou de soustraire du gaz de ladite chambre comprend un moyen de pompage (72) ainsi qu'un moyen associé formant vanne (74).
